# EUROPÄISCHE PATENTSCHRIFT

(11) **EP 3 037 796 B1**
(45) Veröffentlichungstag und Bekanntmachung des Hinweises auf die Patenterteilung: **27.03.2019**
(21) Anmeldenummer: 15201351.2
(22) Anmeldetag: 18.12.2015
(51) Int. Cl.: G01L 5/22, G01L 1/04, G01L 3/14, G01L 5/16, F16F 1/18, F16F 3/02

(54) **FEDERKÖRPER FÜR EINE DREHMOMENTMESSZELLE**
SPRING BODY FOR A TORQUE MEASURING CELL
CORPS DE RESSORT POUR UNE CELLULE DE MESURE DE COUPLE

(30) Priorität: 23.12.2014 DE 102014019546
(43) Veröffentlichungstag der Anmeldung: 29.06.2016
(73) Patentinhaber: Samson Aktiengesellschaft, 60314 Frankfurt (DE)
(72) Erfinder: Kolbenschlag, Stefan, 64291 Darmstadt (DE); Oberheim, Rainer, 64625 Bensheim (DE)
(74) Vertreter: Schmid, Nils T.F.

(56) Entgegenhaltungen:
- EP-A1- 2 364 737
- EP-A2- 1 344 711
- GB-A- 957 761
- GB-A- 1 083 756

## Beschreibung

Die Erfindung betrifft im Allgemeinen einen Federkörper für einen Kraftaufnehmer oder eine Wägezelle insbesondere zum Einsatz auf dem Gebiet der Prozesstechnik, insbesondere Feldgerättechnik, bei der ein Stellantrieb ein Stellgerät, wie ein Stellventil, in eine gewünschte Stellung verfährt, um eine Prozessfluidströmung einer prozesstechnischen Anlage einstellen zu können. Insbesondere ist der Kraftaufnehmer als Kraftkoppler in einer Antriebskraftübertragungsstruktur, wie einer Stellstangenstruktur oder Stellwellenstruktur, integriert, die beispielsweise einen Stellantrieb, wie einen pneumatischen Stellantrieb, mit einer Stellarmatur, wie einem Stellventil, beispielsweise einer prozesstechnischen Anlage kraftübertragend koppelt und die Kräfte von dem Krafterzeuger in den Kraftverbraucher überträgt. Der erfindungsgemäße Kraftaufnehmer kann darüber hinaus in vielen Bereichen sowohl des täglichen Lebens als auch in anderen Industriezweigen oder zu Forschungszwecken angewendet werden. Kraftaufnehmer oder Wägezellen sind im Allgemeinen bekannt als Drehmomentsensor, Zugkraft- und/oder Druckkraftsensor, insbesondere als Drehmomentmesszelle oder Zugkraft- und/oder Druckkraftmesszelle.

Die Erfindung betrifft einen Kraftaufnehmer, bei dem ein Drehmoment erfasst werden soll, das eine Schwenkbewegung eines zu stellenden Bauteils betreibt, wobei eine Schwenkbewegungsamplitude auf unterhalb von 360° begrenzt ist. Vorzugsweise ist die maximale Drehbewegungsamplitude des Stellantriebs auf 270°, 180°, 120°, 100° oder 90° oder darunterliegend begrenzt. Der Kraftaufnehmer kann darüber hinaus auch für jegliche dynamischen, unabhängig der Drehzahl, als auch statischen Kraftmessaufgaben verwendet werden.

Auf dem technischen Gebiet von Lenkunterstützungen ist gemäß DE 10 2010 041 970 A1 eine Sensoranordnung zur Erfassung einer Verdrehung einer ersten Welle und einer zweiten Welle bekannt, bei der Lenkbewegungen von über 360° vollzogen werden. Zwischen den voneinander separierten Wellen ist ein Torsionsstab kraftübertragend angekoppelt, der die gesamte zu übertragende Kraft zwischen den beiden Wellen überträgt. An den sich zugewandten Enden der Wellen ist eine Haltevorrichtung für einen Magnetträger angebracht. Die Halteeinrichtung ist nicht dazu ausgelegt, die zu erfassenden Stellkräfte zwischen den Wellen zu übertragen, sondern sie dient dazu, eine durch den Torsionsstab zugelassene Relativbewegung zwischen den beiden sich zugewandten Wellenenden durch eine Bewegung des Magnetträgers zu verstärken. Die Haltevorrichtung ist als Steganordnung ausgebildet, welche bei einer Drehbewegung der beiden Wellen eine translatorische Vertikalverschiebung des Magnetträgers veranlasst. Eine dem Magnetträger zugeordnete Sensoreinrichtung erfasst die Veränderung des Magnetfelds, um anhand der erfassten Vertikalverschiebung des Magnets die durch den Torsionsstab zugelassene, elastische Verdrehung der Wellenenden zu erfassen.

Aus DE 10 2005 005 715 A1 ist ein Verfahren und eine Vorrichtung zur Erfassung statischer und dynamischer Drehmomente bekannt. Eine drehstarre und eine drehelastische Ausgleichskupplung kommen zum Einsatz. Bei Einleitung eines Drehmoments in die Enden eines Verformungskörpers einer drehelastischen Ausgleichskupplung wird bei konstant gehaltener Gesamtlänge eine Axialverschiebung eines Mittelbereichs erreicht, welche groß genug sein soll, um sie mit mechanischen Messmitteln erfassen zu können. Die drehstarre, aber axialelastische Ausgleichskupplung gleicht die von der drehelastischen Ausgleichskupplung zugelassene Axialverschiebung des Mittelbereichs wieder aus. An dem Mittelbereich ist mittels eines Kugellagers eine Zwischenscheibe gelagert, welche einer Axialverschiebung des Mittelbereichs folgt und an einer festgelegten Umfangsstellung verbleibt, um von einer gehäusefest angeordneten Messuhr abgegriffen zu werden. Der bekannte Kraftaufnehmer ist aufgrund der Vielzahl von mechanischen und kinematischen Bauteilen fertigungstechnisch aufwendig und es bedarf eines hohen Kalibrierungsaufwands, um präzise Messergebnisse zu erhalten. Zudem kann mit dem bekannten Torsionsspannungsmesser keine Axialkräfte gemessen werden, die zwischen den Wellen zu übertragen sind.

In der Prozesstechnik ist bekannt, Drehmomente und damit die Messung von Torsionsspannungen in Wellen mittels Dehnungsmessstreifen (DMS) punktuell zu erfassen, wie es beispielsweise DE 38 20 838 A1 lehrt. Aufgrund von Oberflächenspannungen an der Messstelle ändert sich ein elektrischer Widerstand innerhalb der Dehnmessstreifen, welcher Rückschlüsse auf die Torsionsbeanspruchung der die Oberfläche bildenden Stellwelle zulässt. Mittels Induktion, Funk oder Schleifring können die Signale von dem mitdrehenden Dehnmessstreifen (DMS) an einen Stellungsregler weitergeleitet werden. Diese bekannte Drehmomentmessung kann nicht in allen technischen Einsatzgebieten Verwendung finden. Die Klebung der DMS Streifen ist nur für bestimmte Temperaturen geeignet. Auch ist die chemische Beständigkeit der DMS Verbindung nicht für alle Umgebungsstoffe gegeben. Das Applizieren der DMS auf den Verformungsträger ist mit Aufwand zu betreiben. Kabellose Übertragungen oder Schleifringübertragungen sind nicht zuverlässig und nicht in allen Einsatzgebieten zulässig, wie in explosionsgefährdeten Atmosphären, beispielsweise in prozesstechnischen Anlagen. Zudem sind die Messdaten zwar unmittelbar an der kraftübertragenden Welle abgegriffen, diese sind allerdings hinsichtlich der Deformation nur an einer einzigen räumlich begrenzten, punktuellen Stelle erhoben und daher unter Umständen aufgrund von Materialinhomogenitäten mit einem Toleranzabzug zu betrachten und müssen von der Messstelle des Verformungsträgers mittels Energieeinsatz an eine Verwertungseinrichtung weitergeleitet werden.

GB 1 083 756 A betrifft Dehnungsmessgeräte und Kraftmessgeräte.

GB 957 761 A betrifft eine Vorrichtung zum Erfassen und Messen von Fluiddrucken oder Kräften.

EP 2 364 737 A1 betrifft ein Antriebssystem mit einem Antrieb, einer Kupplung und einer Last, wobei die Last über die Kupplung mit dem Antrieb verbunden ist.

EP 1 344 711 A2 betrifft eine Automobilsteuervorrichtung einschließlich einer Leistungssteuerungsvorrichtung mit einem Elektromotor sowie eine Rotationswinkelerfassungsvorrichtung und eine Drehmomenterfassungsvorrichtung.

Es ist Aufgabe der Erfindung, die Nachteile des Standes der Technik zu überwinden, insbesondere einen Federkörper für einen Kraftaufnehmer vorzugsweise für die Prozesstechnik, und einen Kraftaufnehmer, wie eine Drehmomentmesszelle, bereitzustellen, mit dem die Nachteile des Standes der Technik überwunden sind, insbesondere eine zuverlässige Drehmomentmessung erreicht wird, wobei der Konstruktions- und Montageaufwand so gering wie möglich zu halten ist.

Diese Aufgabe wird durch die Merkmale des unabhängigen Anspruchs gelöst.

Danach ist ein Federkörper für einen Kraftaufnehmer oder eine Wägezelle, wie eine Drehmoment-, Zugkraft- und/oder Druckkraftmesszelle, vorgesehen. Der Federkörper kann dazu ausgelegt sein, in ein Kraftübertragungsteil, wie eine Welle oder Stellstange, eingebaut zu werden, oder ist bereits als integraler Bestandteil in dem Kraftübertragungsteil enthalten. Der erfindungsgemäße Federkörper umfasst einen Krafteinleitungsabschnitt zum Aufnehmen der zu bestimmenden Kraft, einen Kraftableitungsabschnitt zum Weitergeben der Kraft und einen dazwischenliegenden elastischen Verformungskörper, der derart den Kraftableitungsabschnitt mit dem Krafteinleitungsabschnitt koppelt, dass die von dem Krafteinleitungsabschnitt aufgenommene Kraft insbesondere im Wesentlichen vollständig in den Kraftableitungsabschnitt übertragen wird. Anhand der Kenntnisse des Elastizitätsmoduls des Verformungskörpers insbesondere zwischen dem Kraftableitungsabschnitt und dem Krafteinleitungsabschnitt ist es möglich, aufgrund der lokal begrenzten elastischen Deformation des Verformungskörpers exakte Rückschlüsse auf die die elastische Deformation verursachenden Kräfte zu ziehen. Beispielsweise mittels einer FEM-Analyse kann anhand des vorbekannten E-Moduls die proportional zur Krafteinleitung verursachte Deformation des Verformungskörpers insbesondere von Federstegen und deren definierten Verformungseigenart bestimmt werden.

Der Verformungskörper kann insbesondere derart ausgestaltet sein, dass er bezüglich der zu messenden Kräfte, wie Drehmomente und/oder Zug- oder Druckkräfte, eine geringere elastische Deformationssteifigkeit aufweist als der Kraftableitungsabschnitt, der Krafteinleitungsabschnitt und die sich daran anschließenden Kraftübertragungsanschlussteile. Falls der Verformungskörper mit den Krafteinleitungsbereichen einstückig verbunden ist, haben alle Bestandteile des Kraftübertragungsteils denselben E-Modul, aber ggf. unterschiedliche Deformationssteifigkeiten. Es ist die einzustellende Geometrie des Verformungskörpers, der in einem später noch beschriebenen Beispiel durch eine Anordnung mehrerer Federstege gebildet ist, welche die zu erfassende Deformationsbewegung zulässt. Durch die Formgebung des Verformungskörpers beispielsweise mittels Ausgestaltung einer Anordnung von mehreren Federstegen wird erreicht, dass eine zu erfassende Deformationsbewegung hauptsächlich in dem insbesondere "geschwächten" Verformungskörper stattfindet und diese elastische Deformationsbewegung derart deutlich überwiegt, dass die geringfügigen elastischen Deformationen des Krafteinleitungsabschnitts, des Kraftableitungsabschnitts und der Kraftübertragungsteile insbesondere bei der Berechnung der zu bestimmenden Kraft vernachlässigbar sind.

Dabei kann der Verformungskörper derart axial festgelegt sein, dass mittels der axialen Länge und der Formgebung des Verformungskörpers, wie der Ausrichtung und Strukturierung der Federstege-Anordnung, und dessen Elastizitätsmoduls, rechnerisch Rückschlüsse auf die durchgeleitete und zu bestimmende Kraft möglich sind. Beispielsweise im Falle eines zu bestimmenden Drehmoments sind der Krafteinleitungsabschnitt und der Kraftableitungsabschnitt rotationsförmig, insbesondere ringförmig, ausgebildet, um eine große Verdrehsteifigkeit zu bilden. Auf die Ausgestaltung des Verformungskörpers in der bevorzugten Ausführung wird später eingegangen. Diese kann beispielsweise in einem Vollkörper reduzierter Außenabmessung gebildet sein, um eine geringere Deformationssteifigkeit bereitzustellen als der Krafteinleitungs- und -ableitungsabschnitt.

Der Krafteinleitungsabschnitt und/oder der Kraftableitungsabschnitt können strukturell durch axiale Anschlussflächen des Verformungskörpers selbst gebildet sein. Vorzugsweise ist der Verformungskörper des erfindungsgemäßen Federkörpers ein zwischen zwei zu verbindenden Stellstangenenden, Stellwellenenden oder Antriebswellenenden zu integrierende, separat herzustellende Messwelle oder Messstange, wobei die den Stangen/Wellen zugeordnete Anschlussflächen des Federkörpers als Krafteinleitungs- und Kraftableitungsabschnitt zu verstehen sind. Sollte der Verformungskörper mit der zu koppelnden Stellwelle oder Stellstange aus einem Stück gefertigt sein, sei der Krafteinleitungs- und Kraftableitungsabschnitt als der insbesondere steife Teilbereich des einstückigen Federkörpers zu verstehen, an dem die zu erfassende elastische Relativ-Deformation des insbesondere geschwächten Verformungskörpers beginnt. Der Verformungskörper ist ein Bestandteil des Federkörpers oder vollständig durch den Federkörper gebildet und ist Bestandteil des Kraftübertragungsteils, das einen bestimmbaren oder bereits bekannten Elastizitätsmodul für Drehmomentbelastungen und/oder Druckbelastungen aufweist. Der Verformungskörper zwischen dem Kraftableitungsabschnitt und dem Krafteinleitungsabschnitt ist mit beiden letzteren derart gekoppelt, dass die von dem Krafteinleitungsabschnitt aufgenommene Kraft insbesondere im Wesentlichen vollständig oder zumindest überwiegend, beispielsweise mehr als 50 % oder zumindest mehr als 20 % der zu übertragenden Kraft, in den Kraftableitungsabschnitt bei Durchleitung durch den Verformungskörper übertragen wird. Sämtliche zu übertragende Kräfte sollen vorzugsweise kraftübertragungsgemäß durch den Verformungskörper geleitet werden, um den anschließenden Berechnungsvorgang zum absoluten Bestimmen des Kraftbetrags möglichst genau, mit möglichst geringer Rechnerleistung zu realisieren.

Bei einer alternativen Ausführung der Erfindung bildet der Verformungskörper des erfindungsgemäßen Federkörpers einen Teil einer Stellstange, Stellwelle, Antriebsstange oder Antriebswelle und/oder innerhalb eines Antriebs- oder Ventilgehäuses angeordnet. Insbesondere können Antriebs- und Stellstange bzw. Antriebs- und Stellwelle mit dem Verformungskörper einstückig, vorzugsweise stoffschlüssig, ausgebildet sein.

Des Weiteren hat der Verformungskörper vorzugsweise eine bezüglich der auszuführenden Deformationsbewegung angepasste Formgebung, insbesondere Profilierung, durch die der Verformungskörper an einer festgelegten Stelle insbesondere an der Außenseite des Verformungskörpers eine vorbestimmte, durch die zu übertragende Lastkraft veranlasste, elastische Deformationsrelativbewegung ausführt. Der Verformungskörper ist insbesondere an die zu erwartende Lastkraft im Hinblick auf eine gleichmäßige Spannungsverteilung vorzugsweise in seiner Längsrichtung abgestimmt, um eine homogene Deformationsbewegung und eine vorhersehbare Verlagerung der festgelegten Stelle zu realisieren. Bei der Deformationsrelativbewegung bewegt sich die vorbestimmte Stelle am Verformungskörper gegenüber einem ortsfesten Bauteil, beispielsweise einer Gehäusestruktur des Kraftaufnehmers oder eines dazu benachbarten Funktionsteil, beispielsweise eines Feldgeräts, wie einem Stellungsregler, einem Antriebsgehäuse, einem Ventilgehäuse oder einer dazwischen angeordneten Trägerlaterne, wo wenigstens eine Sensoreinrichtung zum Erfassen der Deformationsrelativbewegung angeordnet ist. Die Sensoreinrichtung kann die Deformationsrelativbewegung beispielsweise optisch, insbesondere laseroptisch, induktiv, kapazitiv und/oder magnetelastisch erfassen. Die Deformationsrelativbewegung gibt mittelbar unter Zuhilfenahme von insbesondere linearen Berechnungsmodellen, welche mittels elektronischer Logikbauteile ausgeführt werden können, Auskunft über den absoluten Betrag der zu erfassenden Kraft, indem das Elastizitätsmodul zwischen dem Krafteinleitungsabschnitt und der betrachteten Stelle vorab bestimmt und entsprechend verwendet wird. Bei Erfassung der Deformationsrelativbewegung zwischen der ortsfesten Sensoreinrichtung und der wenigstens einen vorbestimmten Stelle kann die eingeleitete Lastkraft errechnet werden, insbesondere dann recht einfach, wenn die restlichen Bestandteile des Kraftübertragungsteils, wie der Welle oder Stange, im Wesentlichen verformungssteif ausgeführt sind. Es kann beispielsweise eine elektronische Auswerteeinrichtung vorgesehen sein, die mit dem Kraftaufnehmer, nämlich der Sensoreinrichtung informationsübertragungsgemäß gekoppelt ist.

Des Weiteren hat der Federkörper an der vorbestimmten Stelle wenigstens einen Codierabtastabschnitt, der mit der ortsfesten Sensoreinrichtung insbesondere berührungslos zusammenarbeiten soll. Der Codierabtastabschnitt ist derart an der wenigstens einen Stelle des Verformungskörpers angebracht oder ausgebildet, dass er sämtliche Deformationsbewegungen dieser Stelle folgt. Dabei kann der Codierabtastabschnitt an dem Verformungskörper selbst geformt sein oder durch ein separates Bauteil starr und unbeweglich an dem Deformationskörper, nämlich an der wenigstens einen Stelle, befestigt sein. Auf diese Weise ist es möglich, dass sämtliche auf den Verformungskörper wirkenden Kräfte unter Zuhilfenahme des bekannten Elastizitätsmoduls zwischen der wenigstens einen Stelle und dem Krafteinleitungsabschnitt gemessen werden können. Die dem Codierabtastabschnitt zugeordnete Sensoreinrichtung tastet den Codierabtastabschnitt ab, um die Deformationsbewegung, insbesondere die maximale Deformationsbewegungsamplitude, zu erfassen. Es ist mit dem erfindungsgemäßen Kraftaufnehmer nicht nur möglich, mit einem einzigen Federkörper/Deformationskörper sowohl Drehmomente als auch Zugkräfte als auch Druckkräfte zu erfassen, vielmehr kann mit dem erfindungsgemäßen Kraftaufnehmer eine strukturell einfach aufgebaute Messzelle bereitgestellt werden, welche beispielsweise in lediglich einem Fertigungsschritt hergestellt werden kann, nämlich als einstückig ausgebildeter Federkörper, ohne zusätzliche Bestandteile hinzufügen zu müssen. Vorzugsweise ist der Verformungskörper, insbesondere der gesamte Federkörper aus einem Materialstück, wie einem unmagnetischen Metall, oder Kunststoff realisiert. Aluminium hat als Beispiel eine ausreichende Festigkeit und das möglichst geringe magnetische Verhalten.

Bei einer bevorzugten Ausführung der Erfindung befinden sich zwei unterschiedliche Codierabtastabschnitte insbesondere in unmittelbarer Nachbarschaft zueinander, wobei einer der Codierabtastabschnitte für die Bestimmung einer translatorischen Lastkraft benutzt wird, während der andere Codierabtastabschnitt für die Bestimmung eines Lastmoments benutzt wird, die in den Verformungskörper eingeleitet sind. Sowohl der Zug-/Druckkraft-Codierabtastabschnitt als auch der Drehmoment-Codierabtastabschnitt sind jeweils einer eigenen Sensoreinrichtung zugeordnet, so dass die Deformationsbewegungen der jeweiligen Codierabtastabschnitte separat voneinander erfasst werden, um daraus die Relativbewegung zu ermitteln.

Vorzugsweise ist die wenigstens eine Sensoreinrichtung bezüglich der Relativdeformationsbewegung des Federkörpers ortsfest, also stationär, angebracht, so dass selbst eine kabelführende Informationsweiterleitung an eine Auswerteeinheit ohne weiteres auch bei Rotationsfederkörpern einfach realisierbar ist. Eine Leitungsverlegung hin zum Federkörper ist erfindungsgemäß obsolet.

Anhand der Messgrößen der ersten und zweiten Sensoreinrichtung betreffend des Drehmoments und der Zug-/Drucklast können durch entsprechende Kompensierungsrechenschritte der Auswerteeinheit die jeweiligen Drehmoment- bzw. Zug-/Druckeinzelkomponenten gefiltert und herausgerechnet werden. Dies kann eine lokale Auswerteeinheit realisieren oder von einer übergeordneten Leitwarte durchgeführt werden.

Die Messgrößen der ersten und/oder der zweiten Sensoreinrichtung von der Auswerteeinheit bzw. der Leitwarte direkt für eine Diagnosefunktion verwendet werden, beispielsweise zur Überprüfung, ob ein Defekt vorliegt, wie eine gebrochene Stellstange. Eine solche Diagnosefunktion kann auch basierend auf gefilterten Drehmoment- bzw. Zug-/Druckeinzelkomponenten erfolgen.

Die Auswerteeinheit kann über einen Schwellwerterfasser verfügen, der bei Über- oder Unterschreiten eines vorbestimmten Schwellwerts durch das insbesondere analoge Signal von dem ersten und/oder zweiten Sensor, welches die Messgrößen repräsentiert, ein Warnsignal erzeugt, um insbesondere einen Test abzubrechen. Die Auswerteeinheit kann auch einen oder mehrere Schwellwerterfasser aufweisen, um die anhand eines oberen und eines unteren Schwellwerts einen vorbestimmten Signalbereich definieren, wobei der bzw. die Schwellwerterfasser dazu ausgelegt sind, bei Verlassen des vorbestimmten Signalbereichs das Warnsignal zu erzeugen.

Vorzugsweise weist wenigstens eine Sensoreinrichtung einen Grenzwerterfasser zum Erzeugen eines insbesondere digitalen Grenzwertsignals infolge einer Über- oder Unterschreitung eines vorbestimmten Grenzwerts, insbesondere eines Kraft- und/oder Drehmomentgrenzwerts, durch eine Messgröße auf. Eine Sensoreinrichtung mit Grenzwerterfasser kann insofern als Grenzsignalgeber einsetzbar sein.

Bei einer bevorzugten Ausführung der Erfindung ist der Verformungskörper derart strukturiert, dass die eine Stelle mit dem wenigstens einen Codierabtastabschnitt die Deformationsbewegung in einer Verlagerichtung ausführt, die sich abhängig von der Art der in dem Krafteinleitungsabschnitt eingeleiteten Kraft, wie Zugkraft, Druckkraft und/oder Moment, verändert. Dies bedeutet, dass beispielsweise eine translatorische Verlagerichtung, insbesondere des Drehmoment-Codierabtastabschnitts, bei einem angeleiteten Drehmoment ausgeführt wird, während bei einer eingeleiteten Zug- oder Druckkraft eine Drehbewegung des Codierabtastabschnitts, insbesondere des Zug-/Druck-Codierabtastabschnitts, erfassbar wird. Vorzugsweise bleibt beim Übertragen eines zu erfassenden Drehmoments ein axialer Abstand zwischen dem Krafteinleitungsabschnitt und dem Kraftableitungsabschnitt, also die axiale Länge des Verformungskörpers, im Verlauf des gesamten Deformationsweges des wenigstens einen Codierabtastabschnitts unverändert. Dies kann dadurch realisiert sein, dass der krafteinleitungsseitige Verformungskörper in Hinblick auf den Codierabtastabschnitt und der kraftableitungsseitige Verformungskörper spiegelsymmetrisch zu einer horizontalen oder in Radialrichtung erstreckenden Symmetrieebene ausgebildet sind, aber ein gegenläufiges Deformationsverhalten aufweisen. Eine spezifische Struktur des bezüglich des Codierabtastabschnitts achsensymmetrischen Verformungskörpers wird später im Detail beschrieben.

Bei einer bevorzugten Ausführung der Erfindung ist der Verformungskörper durch wenigstens zwei oder drei Federstege jeweils zum kraftübertragungsgemäßen Koppeln des Krafteinleitungsabschnitts mit dem Codierabtastabschnitt und des Kraftableitungsabschnitts mit dem Codierabtastabschnitt gebildet. Die wenigstens zwei oder drei Federstege können eine langgestreckte Stangen- oder Balkenform insbesondere konstanten Querschnitts in deren Längsverlauf aufweisen. Der Querschnittsverlauf des Stangen- oder Balkenquerschnitts kann auf einer annähernd gleichmäßigen Spannungsverteilung insbesondere für unterschiedliche Lastkräfte formangepasst sein. Die wenigstens zwei oder drei Federstege können einstückig in den Codierabtastabschnitt übergehen. Die wenigstens zwei oder drei Federstege können einstückig in den jeweiligen Krafteinleitungsabschnitt oder Kraftableitungsabschnitt übergehen. An den Übergängen der Federstege zu den Kafteinleitungs- und -ableitungsbereichen und dem Codierabschnitt sind sprungfreie Rundungen vorgesehen, um Spannungsspitzen an den Übergangsbereichen zu vermindern. Insofern ist eine einstückige Ausbildung des Verformungskörpers beispielsweise aus einem Metall, vorzugsweise aus Aluminium oder aus Kunststoff, von Vorteil, weil vorzugsweise für den Deformationskörper ein schwach magnetisches oder unmagnetisches Material herangezogen werden kann. In Hinblick auf eine entsprechende Sensoreinrichtung, die auf einem induktiven Messsystem basiert, kann es von Vorteil sein, dass zur Bildung des Codierabtastabschnitts ein magnetischer Aufsatz an dem Verformungskörper, insbesondere an der einen Stelle, starr und unbeweglich befestigt oder aufgesetzt ist. Beispielsweise ist ein umlaufender Ferritring von besonderem Interesse.

Bei einer bevorzugten Ausführung der Erfindung sind die wenigstens zwei oder drei Federstege des krafteinleitungsseitigen Verformungskörpers sowie des kraftableitungsseitigen Verformungskörpers, vorzugsweise sämtliche Federstege, im Wesentlichen gleich lang dimensioniert. Zudem oder alternativ können die wenigstens zwei oder drei Federstege zu einer Axialrichtung, insbesondere einer Torsions- und/oder Zug-Druckachse, in einem Anstellwinkel angeordnet sein, der vorzugsweise für die wenigstens zwei oder drei Federstege des krafteinleitungsseitigen Verformungskörpers und/oder des kraftableitungsseitigen Verformungskörpers, vorzugsweise sämtliche Federstege, im lastfreien Zustand des Verformungskörpers im Wesentlichen gleich groß sein. Vorzugsweise ist der Anstellwinkel spitz und liegt bei einer bevorzugten Ausführung zwischen 10° und 80°, insbesondere zwischen 20° und 70°. Bei einer bevorzugten Ausführung der Erfindung liegt der Anstellwinkel zwischen 40° und 50°. Bei einer bevorzugten Ausführung der Erfindung ist der Krafteinleitungsabschnitt und der Kraftableitungsabschnitt mit einer den Stegen zugewandten Übergangsfläche gebildet, die sich jeweils in Radialrichtung erstreckt. Die Federstege gehen insbesondere einstückig oder daran zweiteilig befestigt in die insbesondere ebene Übergangsfläche über und insbesondere bilden damit eine Art Schwenkgelenk, um sich gegenüber der Übergangsfläche aufzurichten und zu neigen. Am Fuße des Federstegs im Übergangsbereich zur Übergangsfläche können die Federstege verstärkt sein, um den Lastkräften standzuhalten.

Vorzugsweise liegen die jeweiligen Füße der Federstege in Umfangsrichtung verteilt im Wesentlichen auf einer Kreislinie um die Achse oder der Axialrichtung des Verformungskörpers. Damit ist der Radialabstand der Füße der Federstege zur Axialrichtung des Federkörpers im Wesentlichen gleich groß. Die Federstege erstrecken sich sämtlich windschief zu der Axialrichtung des Federkörpers. Auch die krafteinleitungsseitigen Federstege sind derart windschief zueinander angeordnet, dass auch in deren gedachten Verlängerung keine Schnittpunkte miteinander entstehen. Gleiches kann für die kraftableitungsseitigen Federstege gelten.

Bei einer bevorzugten Ausführung der Erfindung münden die wenigstens zwei oder drei krafteinleitungsseitigen Federstege und die wenigstens zwei oder drei kraftableitungsseitigen Federstege in einem scheiben- oder ringförmigen Mittelabschnitt des Verformungskörpers. Vorzugsweise sind die wenigstens zwei oder drei krafteinleitungsseitigen und kraftableitungsseitigen Federstege und der Mittelabschnitt aus einem Stück gefertigt. Der Mittelabschnitt hat insbesondere eine vorzugsweise rotationssymmetrische Umfangsaußenfläche, die zumindest teilweise zylindrisch geformt sein kann. An der umlaufenden Umfangsfläche ist der Codierabtastabschnitt vorgesehen. Zudem oder alternativ kann der Mittelabschnitt des Verformungskörpers zwei parallel in jeweils einer Radialebene liegende, sich diametral gegenüberliegende, ebene Mündungsflächen aufweisen, in die die wenigstens zwei oder drei kraftableitungsseitigen und krafteinleitungsseitigen Federstege insbesondere einstückig übergehen. Jeder Federsteg hat einen Übergangsfußabschnitt, der vorzugsweise so an der Mündungsfläche angeordnet ist, dass der Übergangsfußabschnitt jedes Federstegs der wenigstens zwei oder drei kraftableitungsseitigen Federstege einem Übergangsfußabschnitt der Federstege der wenigstens zwei oder drei krafteinleitungsseitigen Federstege im Wesentlichen axial an den diametralen Mündungsflächen gegenüberliegt. Auf diese Weise wird eine besonders gleichförmige Deformation des Verformungskörpers auf der Krafteinleitungsseite und auf der Kraftableitungsseite bezüglich der Mittelabschnitts realisiert.

Bei einer Weiterbildung der Erfindung sind für den krafteinleitungsseitigen Verformungskörper sowie den kraftableitungsseitigen Verformungskörper in Hinblick auf den Mittelabschnitt des Verformungskörpers weniger als zehn, acht oder sechs Federstege vorgesehen, wobei insbesondere die Anzahl der Federstege für den krafteinleitungsseitigen Verformungskörper sowie den kraftableitungsseitigen Verformungskörper gleich groß ist, insbesondere bei drei oder vier liegt.

Bei einer Weiterbildung der Erfindung hat der Codierabtastabschnitt wenigstens ein Berg-Tal-Profil. Das Berg-Tal-Profil dient dazu, die Sensorqualität besonders hochauflösend zu gestalten, insbesondere dann, wenn für die Sensoreinrichtung eine GMR-Sensoranordnung oder eine optische Sensoreinrichtung verwendet wird, mit welcher selbst kleine Deformationsbewegungen von wenigen Zehntel Millimetern erfasst und gemessen werden können. Das Berg-Tal-Profil kann auch eine Art Zahnstruktur aufweisen, an der die Übergänge von benachbarten Zähnen durch geometrische Kanten gebildet sind, welche die Messauflösung optimiert. Je feiner die Teilung der Verzahnung der Zahnstrukturen oder der Berg-Tal-Anordnung ist, desto präziser ist die Messung. Vorzugsweise ist die Breite eines Bergs/Tals, eines Zahns kleiner als 2 mm oder 1 mm.

Vorzugsweise hat der Codierabtastabschnitt ein Umfangs-Berg-Tal-Profil, das sich in Umfangsrichtung bezüglich der Axialrichtung erstreckt. Vorzugsweise hat die Erstreckungsrichtung des Umfangs-Berg-Tal-Profils keine axiale Richtungskomponente. Mit dem Umfangs-Berg-Tal-Profil können die Axialverschiebungen des Mittelabschnitts des Verformungskörpers erfasst werden. Zudem oder alternativ kann der Codierabtastabschnitt auch ein Axial-Berg-Tal-Profil aufweisen, das sich in Axialrichtung erstreckt. Die Erstreckungsrichtung des Axial-Berg-Tal-Profils hat vorzugsweise keine Radial- und Umfangskomponente. Mit dem Axial-Berg-Tal-Profil kann die Schwenkrelativbewegung des Codierabtastabschnitts erfasst werden, um die Zug- oder Druckkraft zu messen, die auf den Verformungskörper wirkt. Die Berge und Täler des jeweiligen Berg-Tal-Profils können parallel zueinander verlaufen, um eine möglichst präzise, hochauflösende Messung zu erhalten. Hat der Codierabtastabschnitt sowohl ein Umfangs-Berg-Tal-Profil sowie ein Axial-Berg-Tal-Profil, so besteht die Möglichkeit, sowohl Druck-/Zugkräfte zu messen als auch Drehmomente. Selbst kombinierte Druck-/Zugkräfte und Drehmomente können mit dem erfindungsgemäßen Federkörper selektiv erfasst werden. Dabei ist lediglich eine Federkörperstruktur notwendig, wobei der entsprechende Codierabtastabschnitt auszugestalten ist.

Zur selektiven Messung der Druck-/Zugkräfte und dem Drehmomente sind vorzugsweise zwei Sensoreinrichtungen vorgesehen. Eine Sensoreinrichtung detektiert den Zug-/Druck-Codierabtastabschnitt, welcher sich verformungskörpergemäß proportional einer Zug-/Druckkraft bewegt, insbesondere rotiert. Eine andere Sensoreinrichtung detektiert den Drehmoment-Codierabtastabschnitt, welcher sich proportional zu einem eingeleiteten Drehmoment bewegt, insbesondere sich translatorisch bewegt. Auf diese Weise können Zug-Druckkräfte und Drehmomente getrennt voneinander gleichzeitig erfasst werden. Dies kann nicht nur bei statischen Betriebszuständen des Federkörpers sondern auch bei rotierenden Betriebsbewegungen gemessen werden, ohne dass Daten oder Energie von einem Rotor zu einem Stator übertragen werden müssen. Selbstverständlich können auch ausschließlich das Drehmoment oder Zug-Druckkräfte mit nur einer einzigen Sensoreinrichtung gemessen werden. Zur Verbesserung der Messgenauigkeit kann eine Sensoreinrichtung auch mehrere Sensoren besitzen, welche am Umfang, in der Nähe des Codierabtastabschnitts angeordnet sind. Hiermit werden unter anderen mechanische Rundlauffehler kompensiert.

Soll der erfindungsgemäße Kraftaufnehmer lediglich zum Messen von Drehmomenten verwendet werden (und Zug-Druckkräfte messtechnisch vernachlässigbar sein), so ist eine Wälzlagerung für den Federkörper ausreichend, welche eine axiale Verschiebung des Krafteinleitungsbereichs gegenüber dem Kraftableitungsbereich verhindert. Es kann unter Umständen hilfreich sein, den Krafteinleitungsbereich gegenüber dem Kraftableitungsbereich leicht insbesondere gegen eine Federwirkung der Federstege axial vorzuspannen. Dies verhindert ein ungewolltes axiales Spiel und erhöht die Messgenauigkeit. Sollen Zug-/Druckkräfte und Drehmomente in einem Kraftaufnehmer gemeinsam gemessen werden, so muss eines der beiden Lager oder ein zusätzliches Lager eine axiale Verschiebung vom Krafteinleitungsbereich gegenüber dem Kraftableitungsbereich gegen die elastischen Federstege zulassen.

Des Weiteren betrifft die Erfindung einen Kraftaufnehmer mit einem nach einem der vorstehenden Ansprüche ausgebildeten Federkörper. Der Kraftaufnehmer umfasst eine dem Codierabtastabschnitt zugeordnete Sensoreinrichtung zum insbesondere berührungslosen Abtasten des Codierabtastabschnitts. Vorzugsweise ist die Sensoreinrichtung eine hochauflösende GMR-Sensoranordnung, welche wenigstens einen MR-Chip sowie wenigstens einen kleinen bias-Großmagnet zur Erzeugung eines Magnetfeldes bereitstellt. Die GMR-Sensoranordnung ist in der Nähe des Codierabschnitts anzuordnen.

Vorzugsweise hat der Kraftaufnehmer ein starres Gehäuse, an dessen Innenseite die Sensoreinrichtung angeordnet ist. Das starre Gehäuse umgibt den Federkörper in Umfangsrichtung vollständig und kann beispielsweise in einer Zylinderform außenseitig und/oder innenseitig ausgeführt sein. Über Wälzlager ist das Gehäuse an dem Federkörper, insbesondere an dem Krafteinleitungsabschnitt und/oder an dem Kraftableitungsabschnitt abgestützt.

Die Erfindung betrifft auch ein Kraftübertragungsteil, wie eine Stellstange oder eine Stellwelle, eines Feldgeräts/Stellgeräts, dessen pneumatischer Antrieb eine Stellarmatur, wie ein Stellventil, stellt. Dabei kann die Erfindung auch auf das Feldgerät/Stellgerät selbst gerichtet werden. Erfindungsgemäß ist der Federkörper als Kraftübertragungsteilabschnitt in dem Kraftübertragungsteil kraftübertragungsgemäß integriert.

Weitere Eigenschaften, Vorteile und Merkmale der Erfindung werden durch die folgende Beschreibung bevorzugter Ausführungen anhand der beiliegenden Zeichnungen erläutert, in denen zeigen:
- Fig. 1: eine perspektivische Ansicht eines erfindungsgemäßen Federkörpers;
- Fig. 2: eine Seitenansicht des Federkörpers nach Fig. 1;
- Fig. 3: eine Teilquerschnittsansicht eines erfindungsgemäßen Kraftaufnehmers mit dem Federkörper nach Fig. 1 und 2;
- Fig. 4: ein erfindungsgemäßer Federkörper in einer weiteren Ausführungsform, wobei der Federkörper sowohl als Drehmomentmesswelle als auch als Druck-/Zugkraftmessstange in Funktionsunion verwendet werden kann;
- Fig. 5a und 5b: Seitenansichten des erfindungsgemäßen Federkörpers nach Fig. 4 in zwei Betriebszuständen bei einer Drehmomentbelastung;
- Fig. 6a und 6b: Seitenansichten des Federkörpers nach Fig. 4 in zwei Betriebszuständen bei einer axialen Druckbelastung; und
- Fig. 7: eine schematische Darstellung eines erfindungsgemäßen Stellgeräts mit stilisiertem erfindungsgemäßen Kraftaufnehmer.

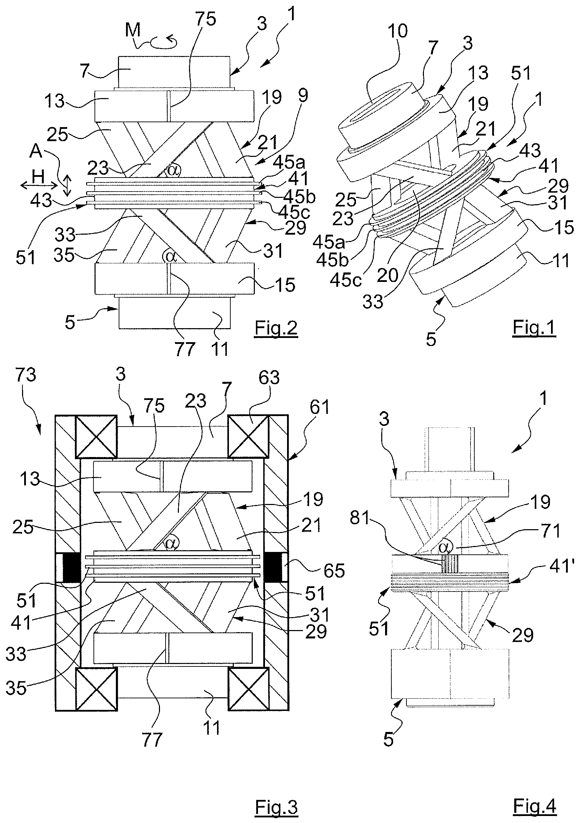

In Fig. 1 und 2 ist ein erfindungsgemäßer Federkörper für den Einsatz als Messwelle zum Bestimmen von durch den Federkörper zu übertragenden Drehmomenten im Allgemeinen mit der Bezugsziffer 1 versehen.

Der Federkörper 1 ist dazu ausgelegt, in eine Wellenstruktur integriert zu werden, die aus zwei Wellenabschnitten (nicht dargestellt) besteht, eine Krafteinleitungswelle und eine Kraftableitungswelle, wobei zwischen den Wellen der als Messwelle ausgebildete Federkörper 1 einzusetzen ist. Zum Anschluss an die jeweiligen Wellen umfasst der Federkörper 1 einen Krafteinleitungsabschnitt 3 zum Aufnehmen des Drehmoments M und einen Kraftableitungsabschnitt 5 zum Weitergeben des Drehmoments.

Der Krafteinleitungsabschnitt 3 sowie der Kraftableitungsabschnitt 5 haben eine mindestens gleich große Durchmesser- oder Breitenabmessung wie die zu koppelnden Wellen (nicht dargestellt) und sind in einem zylindrischen Befestigungszapfen 7, 11 und einem zylindrischen Verstärkungsübergangsabschnitt 13, 15 aufgeteilt. Der Befestigungszapfen 7, 11 und der Verstärkungsübergangsabschnitt 13, 15 sind verformungssteif ausgeführt und haben vorzugsweise einen Durchgang 10, um einen Führungsarm oder eine Bruchsicherungsstange durch den Federkörper 1 hindurchführen zu können. Ein derartiger Führungsarm ist in Fig. 4 mit der Bezugsziffer 71 angedeutet, wobei der Führungsarm 71 nur mit dem Kraftableitungsabschnitt 5 oder dem Krafteinleitungsabschnitt unbeweglich fest verbunden ist. An dem jeweils anderen Kraftableitungsabschnitt (3 oder 5) ist eine führungslose Hindurchführung durch den Durchgang 10 realisiert, damit eine Beweglichkeit zwischen dem Krafteinleitungsabschnitt und dem Kraftableitungsabschnitt 5 bereitgestellt ist.

Zwischen dem Kraftableitungsabschnitt 5 und dem Krafteinleitungsabschnitt 3 ist im Allgemeinen der Verformungskörper 9 angeordnet, der die beiden Kraftleitungsabschnitte 3, 5 miteinander kraftschlüssig zur Übertragung sämtlicher Betätigungskräfte koppelt. Ab dem Verstärkungsübergangsbereich 13, 15 ist der Deformationskörper 9 deutlich deformationsschwäeher ausgeführt, i.e. die Kraftableitungsabschnitte 3, 5 sind deutlich deformationssteifer. Die einhergehende, geringfügige Deformation des Krafteinleitungsabschnitts 3 und des Kraftableitungsabschnitts 5 ist bei der Bestimmung, insbesondere Berechnung, des absoluten Kraftbetrags vernachlässigbar.

An dem Verstärkungsübergangsabschnitt 13, 15 erstrecken sich in einem spitzen Winkel α gegenüber einer Horizontalrichtung H, die der Radialrichtung entspricht, von etwa 45° drei Federstege 21, 23, 25 zur Bildung des krafteinleitungsseitigen Deformationskörperteils 19. Auch an der Kraftableitungsseite erstrecken sich die Federstege 31, 33, 35 in dem gleichen Winkel α von dem verstärkten Übergangsbereich 15, um den kraftableitungsseitigen Deformationskörperteil 29 zu bilden. In einer axialsymmetrischen Mitte des Federkörpers 1 ist ein Mittelabschnitt 41 in einer rotationsförmigen Ringform Teil des Deformationskörpers und definiert eine umlaufende Umfangsfläche 43, an dem drei ringumlaufende Vorsprünge 45a, 45b, 45c scharfkantig vorstehen. Der ringförmige Mittelabschnitt 41 ist deutlich deformationssteifer als die daran krafteinleitungsseitig und kraftableitungsseitig anschließende Federstegstruktur. Der Mittelabschnitt 41 hat einen derart großen Durchlass 20, dass, sollte ein Führungsarm 71 implementiert sein, eine freie Drehbeweglichkeit des Mittelabschnitts 41 möglich ist, ohne den Führungsarm 71 in den Betriebszuständen zu kontaktieren.

Sowohl der Krafteinleitungsabschnitt 3, der Kraftableitungsabschnitt 5 sowie die krafteinleitungsseitigen Federstege 21 bis 25 und die kraftableitungsseitigen Federstege 33 bis 35 und der Mittelabschnitt 41 des Federkörpers sind aus einem insbesondere unmagnetischen Metallstück, wie einem Aluminiumstück, einstückig ausgebildet. Auch ein betreffend die zu messenden Kräfte ausreichend festes Kunststoffmaterial ist einsetzbar.

Im Betrieb des Federkörpers 1 als Teil des Kraftaufnehmers 73, der in Fig. 3 im Detail dargestellt ist, werden sämtliche zu erfassende Kräfte, wie das Drehmoment M, über den Krafteinleitungsabschnitt 3 in die Deformationskörperteile (19, 29, 41) in den Kraftableitungsabschnitt 5 übertragen, so dass der Deformationskörper 9 eine elastische Deformation erfährt, deren rein axiale Bewegungsamplitude an dem Mittelbereich 41 abgreifbar ist. Dafür hat der Mittelbereich 41 an der Umfangsfläche 43 einen Codierabtastabschnitt 51 in Form von umlaufenden Ringvorsprüngen 45a bis 45c ausgebildet. Der Codierabtastabschnitt 51 kann anstatt der Ringvorsprünge 45a bis 45c andere Konturen, Kanten oder auch eine simple reine zylindrische Umfangsfläche aufweisen, insbesondere dann, wenn der Codierabtastabschnitt ein magnetischer Bestandteil des Mittelbereichs ausgeführt ist. Dann kann bereits bei Verwendung eines hochauflösenden GMR-Sensor kleinste Axialbewegungen des Codierabtastabschnitts erfasst werden. Vorzugsweise sind die Ringvorsprünge 45a bis 45c vorgesehen, welche die Auflösung der Abtastung verbessern. Der Codierabtastabschnitt 51 kann auch lediglich ein optisch erfassbares Element sein, welches von einem optischen Sensor erkennbar ist. Es sei klar, dass auch mechanische Abtastsensoriken eingesetzt werden können, die in unmittelbaren Abroll- oder Ablaufkontakt zum Codierabtastabschnitt 51 liegen, um die Deformationsbewegung am Mittelbereich 41 festzustellen.

Bei den in Fig. 1 bis 3 dargestellten Federkörper 1 besteht die besondere Kinematik des Deformationskörpers 9 darin, dass bei einer umfangsorientierten Drehmomentbelastung, die effektiv erfassbare Deformationsbewegung des Deformationskörpers 9 aufgrund der Steganordnungen in einer zur Umfangsorientierung senkrecht stehenden Axialbewegung des Codierabschnitts führt. Aus diesem Grund verlaufen die Ringvorsprünge 45a bis 45c in Umfangsrichtung, damit eine Axialverschiebung des Mittelbereichs 41 und damit des Codierabtastabschnitts 51 am leichtesten erfassbar wird.

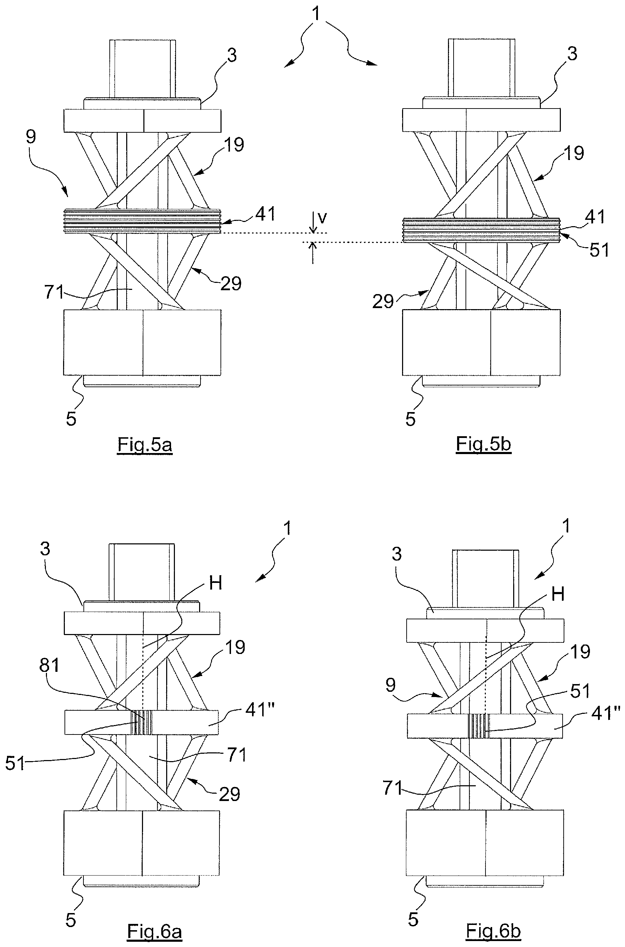

Sowohl an dem Krafteinleitungsabschnitt 3 als auch an dem Kraftableitungsabschnitt 5 ist eine visuelle Anzeige 75, 77 in Form einer Nut eingebracht, um eine Verdrehung des Krafteinleitungsabschnitts 3 gegenüber dem Kraftableitungsabschnitt 5 darzustellen, was insbesondere in Fig. 5a und 5b ersichtlich ist.

Der erfindungsgemäße Kraftaufnehmer 73 hat den Federkörper 1 sowie ein zylindrisches Gehäuseteil 61, das über Wälzlager 63 an dem jeweiligen Kraftableitungsabschnitt 5 und Krafteinleitungsabschnitt 3 gelagert ist.

Auf axialer Höhe des Mittelabschnitts 41 ist eine Sensoreinrichtung 65 benachbart dem Codierabtastabschnitt 51 angeordnet. Führt der Codierabtastabschnitt 51 eine Axialbewegung aus, wird diese Bewegung aufgrund der Magnetfeldänderung durch die Sensoreinrichtung 65 erfasst, die beispielsweise ein GMR-Sensor sein kann. Vorzugsweise ist der Codierabtastabschnitt 51 ein auf den Mittelbereich 41 aufgezogener Metallring, wie ein Ferritring, mit dem eine besonders präzise Messung ermöglicht ist.

In Fig. 4 ist die weitere Ausführung eines erfindungsgemäßen Federkörpers im Allgemeinen mit der Bezugsziffer 1 versehen, wobei für die gleichen oder identischen Bestandteile die gleichen Bezugsziffern verwendet wurden.

Der Federkörper 1 unterscheidet sich von dem Federkörper nach Fig. 1, 2 und 3 dadurch, dass ein besonderer Mittelabschnitt 41' verwendet wird, der in axialer Richtung etwas breiter ausgeführt ist und zur Bildung des Codierabtastabschnitts 51 sowohl die Ringvorsprünge 45a bis 45c als auch mehrere sich axial parallel erstreckende Vorsprünge 81 aufweist. Der Federkörper 1 ist beispielsweise derart in dem Gehäuseteil 61 untergebracht, dass die vertikal verlaufenden Vorsprünge 81 ebenfalls der Sensoreinrichtung 65 gegenüberliegen.

Mit der Ausführung gemäß dem Federkörper nach Fig. 4 ist es möglich, sowohl Druckkräfte/Zugkräfte als auch Drehmomente mit einem Federkörper zu erfassen. Beim Einsatz von Druckkräften, wie in Fig. 6a und 6b ersichtlich ist, lässt der Deformationskörper 9 eine axiale Aufeinanderzubewegung der Kraftleitungsabschnitte 3, 5 zu, wobei allerdings eine Schwenkbewegung des Mittelabschnitts 41 bzw. 41' bzw. 41" in einer Radialebene realisiert wird.

Diese Umfangsdeformationsbewegung des Mittelabschnitts 41' ist über die vertikal verlaufenden Vorsprünge 81 durch die Sensoreinrichtung 65 erfassbar.

Die Sensoreinrichtung 65 kann mit einem nicht näher dargestellten Rechner verbunden sein, der anhand der bekannten Elastizitätsmodule des Verformungskörpers inklusive der weiteren Bestandteile den exakten Betrag der Druck- oder Zugkraft ermitteln kann.

Wie in Fig. 4 ersichtlich ist, umfasst, wie bereits oben beschrieben, der Federkörper 1 einen Führungsarm 71, der an dem Kraftableitungsabschnitt 5 befestigt ist und sich berührungsfrei durch den Mittelabschnitt 41' hindurch zum Krafteinleitungsabschnitt erstreckt. Über den Führungsarm 71 werden keine Drehmomente oder Druck-/Zugkräfte übertragen.

In Fig. 5a und 5b ist der Federkörper 1 gemäß Fig. 1, wobei zusätzlich ein Führungsarm 71 vorgesehen ist, der wie oben ausgebildet sein kann.

Bei Einleitung eines Drehmoments M verschieben sich der Mittelabschnitt 41 und damit der Codierabtastabschnitt 51 in Axialrichtung um den Deformationsweg v, welcher Verschiebeweg von der Sensoreinrichtung 65 erfasst wird. Anhand der bekannten Elastizitätsmodule und insbesondere auch aus Erfahrungswerten ermittelbar, kann das Drehmoment bestimmt werden, das über den Deformationskörper 9 von dem Krafteinleitungsabschnitt 3 in den Kraftableitungsabschnitt 5 übertragen wird.

In Fig. 6a und 6c ist der Druck-Betriebszustand dargestellt, wobei die Hilfsstrichlinie die Umfangsverschiebung, die der Deformation des Verformungskörpers 9 entspricht, verdeutlicht ist. Diese Umfangsverschiebung ist anhand der Vertikalvorsprünge 81 des Mittelabschnitts 41" von der Sensoreinrichtung 65 erfassbar.

Wie in Fig. 4 angedeutet ist, können die Mittelabschnitte 41 und 41' kombiniert werden, um zum Mittelabschnitt 41' zu gelangen, mit dem sowohl Druck- und Zugkräfte als auch Drehmomente ermittelbar sind, indem die Umfangsverschiebung bzw. die Axialverschiebung durch die Sensoreinrichtung erfasst wird.

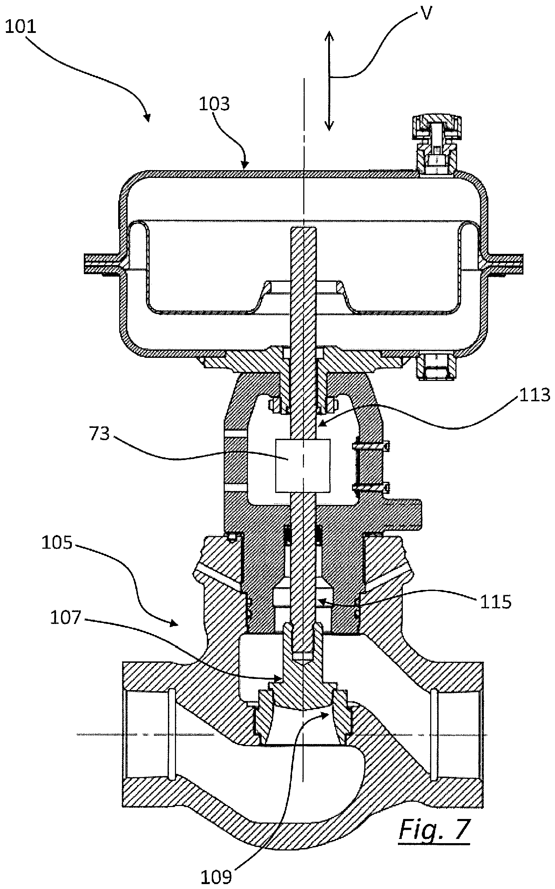

Figur 7 zeigt ein Feldgerät 101, das einen pneumatischen Stellantrieb 103 aufweist, mit dem ein Stellventil 105 des Feldgeräts 101 betätigt wird. Das Feldgerät 101 hat eine als Stellventil 105 ausgebildete Stellarmatur mit translationsbeweglichem Ventilglied 107. Zum Übertragen der Stellkraft von dem Stellantrieb 103 auf das Ventilglied 107 sind eine Stellstange 111 und eine Antriebsstange 113 vorgesehen.

In Figur 7 ist eine zwischen der Stellstange 111 und der Antriebsstange 113 des Feldgeräts 101 vorgesehener Kraftaufnehmer 73 rein schematisch dargestellt. Der Kraftaufnehmer 73 umfasst einen (in Figur 7 nicht näher dargestellten) Federkörper, der die von dem Stellantrieb 103 für das Stellventil 105 bereitgestellte Stellkraft überträgt. Als Stellglied ist ein Ventilglied 107 vorgesehen, dass mit einem Ventilsitz 109 abdichtend zusammenwirken kann und welches in Vertikal- bzw. Axialrichtung V der Stangen 111, 113 translatorisch beweglich ist, so dass bei der dargestellten Ausführung die beim Schließen des Stellventils 105 aufgebrachte Stellkraft eine Druckkraft und die zum Öffnen des Ventils 105 bereitgestellte Stellkraft eine Zugkraft ist. Es sei klar, dass einer anderen (nicht näher dargestellten) Ausführung eines Feldgeräts auch eine andere Stellarmatur und/oder ein anderer Stellantrieb vorgesehen sein kann, zum Beispiel kann eine Stellarmatur als Stell- oder Regelventil mit drehbeweglicher Drosselklappe ausgebildet sein, dem eine rotatorische Stellkraft, also ein Stelldrehmoment, von dem Stellantrieb bereitgestellt wird, welcher dementsprechend als Schwenkantrieb realisiert sein kann.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, wobei die Erfindung durch die Ansprüche definiert ist.

### Bezugszeichenliste

- 1: Federkörper
- 3: Krafteinleitungsabschnitt
- 5: Kraftableitungsabschnitt
- 7, 11: Befestigungszapfen
- 9: Verformungskörper
- 10: Durchgang
- 13, 15: Verstärkungsübergangsabschnitt
- 9, 19, 29: Deformationskörperteil
- 20: Durchlass
- 21, 23, 25: Federsteg
- 31, 33, 35: Federsteg
- 41, 41', 41": Mittelabschnitt
- 43: Umfangsfläche
- 45a, 45b, 45c: Vorsprung
- 51: Codierabtastabschnitt
- 61: Gehäuseteil
- 63: Wälzlager
- 65: Sensoreinrichtung
- 71: Führungsarm
- 73: Kraftaufnehmer
- 75, 77: Anzeige
- 81: Vorsprung
- 101: Feldgerät
- 103: pneumatischer Stellantrieb
- 105: Stellventil
- 107: Ventilglied
- 109: Ventilsitz
- 111: Stellstange
- 113: Antriebsstange
- H: Horizontalrichtung
- M: Drehmoment
- V: Vertikalrichtung

## Patentansprüche

1. Drehmomentmesszelle mit einem Federkörper (1), der in ein Kraftübertragungsteil, wie eine Welle oder Stellstange, einbaubar ist oder eingebaut ist, umfassend: einen Krafteinleitungsabschnitt (3) zum Aufnehmen des Drehmoments, einen Kraftableitungsabschnitt (5) zum Weitergeben des Drehmoments, einen dazwischen liegenden elastischen Verformungskörper (9), der derart den Kraftableitungsabschnitt (5) mit dem Krafteinleitungsabschnitt (3) koppelt, dass das von dem Krafteinleitungsabschnitt (3) aufgenommene Drehmoment in den Kraftableitungsabschnitt (5) übertragen wird, und der an wenigstens einer Stelle eine vorbestimmte, durch das zu übertragende Drehmoment veranlasste, elastische Deformationsbewegung ausführt, und einen Codierabtastabschnitt (51), der an der wenigstens einen Stelle des Verformungskörpers (9) sämtlichen Deformationsbewegungen der wenigstens einen Stelle folgend vorgesehen ist, wobei der Verformungskörper (9) derart strukturiert ist, dass die wenigstens eine Stelle mit dem Codierabtastabschnitt (51) die Deformationsbewegung in einer Verlagerrichtung ausführt, die abhängig von dem in den Krafteinleitungsabschnitt (3) eingeleiteten Drehmoment ist und die gegenüber der Krafteinleitrichtung des in den Krafteinleitungsabschnitt (3) eingeleiteten Drehmoments unterschiedlich ist, und
wobei die Drehmomentmesszelle ferner eine dem Codierabtastabschnitt (51) zugeordnete Sensoreinrichtung (65) zum Abtasten des Codierabtastabschnitts (51) umfasst, **dadurch gekennzeichnet, dass** der Codierabtastabschnitt wenigstens ein Berg-Tal-Profil umfasst.

2. Drehmomentmesszelle nach Anspruch 1, wobei die wenigstens eine Stelle mit dem Codierabtastabschnitt (51) bei Einleitung eines Drehmoments eine überwiegend translatorische Bewegung ausführt, wobei beim Übertragen eines zu erfassenden Drehmoments ein axialer Abstand zwischen dem Krafteinleitungsabschnitt (3) und dem Kraftableitungsabschnitt (5) im Verlauf des gesamten Deformationsweges des Codierabtastabschnitts (51) unverändert ist.

3. Drehmomentmesszelle nach Anspruch 1 oder 2, wobei der Verformungskörper (9) durch wenigstens zwei oder drei Federstege (21, 23, 25; 31, 33, 35) jeweils zum kraftübertragungsgemäßen Koppeln des Krafteinleitungsabschnitts (3) mit dem Codierabtastabschnitt (51) und des Kraftableitungsabschnitts (5) mit dem Codierabtastabschnitt (51) gebildet ist, wobei die wenigstens zwei oder drei Federstege (21, 23, 25; 31, 33, 35) eine langgestreckte Stangen- oder Balkenform aufweisen, deren Profilquerschnitt im Längsverlauf der Federstege derart auf die zu erwartende Lastkraft formangepasst ist, dass eine im Wesentlichen gleichmäßige Spannungsverteilung innerhalb des die jeweiligen Federstege bildenden Materials erreicht ist.

4. Drehmomentmesszelle nach Anspruch 3, wobei die wenigstens zwei oder drei Federstege (21, 23, 25; 31, 33, 35) des krafteinleitungsseitigen Verformungskörpers sowie des kraftableitungsseitigen Verformungskörpers im Wesentlichen gleich lang dimensioniert sind und/oder zu einer Axialrichtung und oder zu einer Torsionsachse in einem spitzen Anstellwinkel angeordnet sind, der für die wenigstens zwei oder drei Federstege (21, 23, 25; 31, 33, 35) des krafteinleitungsseitigen Verformungskörpers sowie des kraftableitungsseitigen Verformungskörpers im lastfreien Zustand des Verformungskörpers (9) im Wesentlichen gleich groß ist.

5. Drehmomentmesszelle nach Anspruch 3 oder 4, wobei die wenigstens zwei oder drei Federstege (21, 23, 25; 31, 33, 35) des krafteinleitungsseitigen Verformungskörpers sowie des kraftableitungsseitigen Verformungskörpers derart zueinander angeordnet sind, dass sich bei Einleiten einer Drehmomentlast (M) die wenigstens zwei oder drei Federstege des krafteinleitungsseitigen Verformungskörpers unter Zunahme eines Anstellwinkels (α) aufrichten und dass die wenigstens zwei oder drei Federstege (21, 23, 25; 31, 33, 35) des kraftableitungsseitigen Verformungskörpers unter Verringerung eines Anstellwinkels (α) neigen.

6. Drehmomentmesszelle nach einem der vorstehenden Ansprüche 3 bis 5, wobei die wenigstens zwei oder drei krafteinleitungsseitigen Federstege (21, 23, 25) und die wenigstens zwei oder drei kraftableitungsseitigen Federstege (31, 33, 35) in einem scheibenförmigen Mittelabschnitt (41, 41', 41") des Verformungskörpers (9) münden, der eine Umfangsfläche umfasst, an der der Codierabtastabschnitt (51) vorgesehen ist, und/oder der zwei parallel in jeweils einer Radialebene liegende Mündungsfläche aufweist, in die die wenigstens zwei oder drei Federstege (21, 23, 25; 31, 33, 35) einstückig übergehen, wobei ein Übergangsfußabschnitt jedes Federstegs (21, 23, 25; 31, 33, 35) der wenigstens zwei oder drei kraftableitungsseitigen Federstege (31, 33, 35) einem Übergangsfußabschnitt der Federstege (21, 23, 25; 31, 33, 35) der wenigstens zwei oder drei krafteinleitungsseitigen Federstege (21, 23, 25) im Wesentlichen axial diametral gegenüberliegt.

7. Drehmomentmesszelle nach einem der vorstehenden Anspruch 6, wobei am strukturellen Übergang der wenigstens zwei oder drei Federstege (21, 23, 25; 31, 33, 35) in den scheibenförmigen Mittelabschnitt (41, 41', 41") des Verformungskörpers (9) ein elastisch deformierbares Schwenkgelenk ausgebildet ist, das eine horizontale Schwenkachse definiert, um die der jeweilige Federsteg gegenüber dem Mittelabschnitt (41, 41', 41") je nach Krafteinleitung schwenkend neigt oder aufrichtet.

8. Drehmomentmesszelle nach einem der Ansprüche 3 bis 7, wobei für den krafteinleitungsseitigen Verformungskörper (9) sowie den kraftableitungsseitigen Verformungskörper (9) weniger als zehn, acht oder sechs Federstege (21, 23, 25; 31, 33, 35) vorgesehen sind, wobei die Anzahl der Federstege für den krafteinleitungsseitigen Verformungskörper (19) sowie den kraftableitungsseitigen Verformungskörper (29) gleich groß ist.

9. Drehmomentmesszelle nach einem der vorstehenden Ansprüche, wobei sich ein Umfangs-Berg-Tal-Profil in Umfangsrichtung bezüglich der Axialrichtung erstreckt und/oder sich ein Axial-Berg-Tal-Profil in Axialrichtung erstreckt, wobei die Berge und Täler parallel zueinander verlaufen.

10. Drehmomentmesszelle nach einem der vorstehenden Ansprüche, umfassend eine dem Codierabtastabschnitt (51) zugeordnete Sensoreinrichtung (65) zum berührungslosen Abtasten des Codierabtastabschnitts (51).

## Claims

1. Torque measuring cell having a spring body (1) which is buildable or is built into a power transmission part, such as a shaft or actuator rod, comprising:
a force introduction portion (3) for absorbing the torque, a force discharge portion (5) for transmitting the torque, an intermediate elastic deformation body (9) coupling the force discharge portion (5) to the force introduction portion (3) such that the torque absorbed by the force introduction portion (3) is transmitted to the force discharge portion (5), and which at at least one point executes a predetermined elastic deformation movement caused by the torque to be transmitted, and a coding scanning section (51) which at the at least one point of the deformation body (9) is provided following all deformation movements of the at least one point, the deformation body (9) being structured such that the at least one location with the coding scanning section (51) executes the deformation movement in a displacement direction which is dependent on the torque introduced into the force introduction section (3) and which is different from the force introduction direction of the torque introduced into the force introduction section (3), and
wherein the torque measuring cell further comprises sensor means (65) associated with the coding scanning section (51) for scanning the coding scanning section (51),
**characterized in that** the coding scanning section (51) comprises at least one mountain-valley profile.

2. Torque measuring cell according to claim 1, wherein the at least one location with the coding scanning section (51) executes a predominantly translational movement when a torque is introduced, wherein, when a torque to be detected is transmitted, an axial distance between the force introducing section (3) and the force discharging section (5) remains unchanged in the course of the entire deformation path of the coding scanning section (51).

3. Torque measuring cell according to claim 1 or 2, the deformation body (9) being formed by at least two or three spring bars (21, 23, 25; 31, 33, 35) in each case for coupling the force introduction section (3) to the coding scanning section (51) and the force discharging section (5) to the coding scanning section (51) in accordance with the transmission of force, the at least two or three spring bars (21, 23, 25; 31, 33, 35) have an elongate rod or beam shape, the profile cross-section of which is adapted in shape to the expected load force in the longitudinal extension of the spring bars in such a way that a substantially uniform stress distribution is achieved within the material forming the respective spring bars.

4. Torque measuring cell according to claim 3, wherein the at least two or three spring bars (21, 23, 25; 31, 33, 35) of the deformation body on the force introduction side and of the deformation body on the force discharging side are of substantially equal length and/or are arranged with respect to an axial direction and/or with respect to a torsion axis at an acute angle of incidence which is of substantially equal size for the at least two or three spring bars (21, 23, 25; 31, 33, 35) of the deformation body on the force introduction side and of the deformation body on the force discharging side in the load-free state of the deformation body (9).

5. Torque measuring cell according to claim 3 or 4, wherein the at least two or three spring bars (21, 23, 25; 31, 33, 35) of the deformation body on the force introduction side and of the deformation body on the force discharging side being arranged with respect to one another in such a way that, when a torque load (M) is introduced, the at least two or three spring bars of the deformation body on the force introduction side straighten up with an increase in an angle of incidence (α) and that the at least two or three spring bars (21, 23, 25; 31, 33, 35) of the deformation body on the power discharging side incline with reduction of an angle of incidence (α).

6. Torque measuring cell according to one of the claims 3 to 5, wherein the at least two or three spring bars (21, 23, 25) on the force introduction side and the at least two or three spring bars (31, 33, 35) on the force discharging side join into a disc-shaped central section (41, 41', 41") of the deformation body (9) which comprises a circumferential surface on which the coding scanning section (51) is provided and/or which has two mouth surfaces which lie parallel in a respective radial plane and into which the at least two or three spring bars (21, 23, 25; 31, 33, 35) merge in one piece, wherein a transition foot portion of each spring bar (21, 23, 25; 31, 33, 35) of the at least two or three force discharging side spring bars (31, 33, 35) is substantially axially diametrically opposed to a transition foot portion of the spring bars (21, 23, 25; 31, 33, 35) of the at least two or three force introducing side spring bars (21, 23, 25).

7. Torque measuring cell according to claim 6, wherein at the structural transition of the at least two or three spring bars (21, 23, 25; 31, 33, 35) into the disc-shaped central section (41, 41', 41") of the deformation body (9) an elastically deformable pivot joint is formed which defines a horizontal pivot axis about which the respective spring bar tilts or straightens relative to the central section (41, 41', 41") in a pivoting manner depending on the introduction of force.

8. Torque measuring cell according to one of the claims 3 to 7, wherein less than ten, eight or six spring bars (21, 23, 25; 31, 33, 35) are provided for the deformation body (9) on the force introduction side and for the deformation body (9) on the force discharging side, wherein the number of spring bars for the deformation body (19) on the force introduction side and for the deformation body (29) on the force discharging side is the same.

9. Torque measuring cell according to one of the preceding claims, wherein a circumferential mountain-valley profile extends in the circumferential direction with respect to the axial direction and/or an axial mountain-valley profile extends in the axial direction, wherein the mountains and valleys extend parallel to each other.

10. Torque measuring cell according to one of the preceding claims, comprising a sensor device (65) assigned to the coding scanning section (51) for contactless scanning of the coding scanning section (51).

## Revendications

1. Cellule de mesure de couple de rotation avec un corps élastique (1) intégré ou apte à être intégré dans une pièce de transmission de force, telle qu'un arbre ou une tige de réglage, comprenant : une section d'introduction de force (3) destinée à recevoir le couple de rotation, une section de dérivation de force (5) destinée à transmettre le couple de rotation, un corps de déformation (9) élastique disposé entre celles-ci, lequel accouple la section de dérivation de force (5) à la section d'introduction de force (3) de manière à transmettre le couple de rotation reçu par la section d'introduction de force (3) à la section de dérivation de force (5), et lequel effectue un mouvement de déformation élastique prédéterminé provoqué à au moins un endroit par le couple de rotation à transmettre, et une section de balayage de codage (51) prévue à l'au moins un endroit du corps de déformation (9) et suivant tous les mouvements de déformation de l'au moins un endroit, dans laquelle le corps de déformation (9) est structuré de telle façon que l'au moins un endroit avec la section de balayage de codage (51) effectue le mouvement de déformation dans une direction de déplacement dépendante du couple de rotation transmis à la section d'introduction de force (3) et différente de la direction d'introduction de force du couple de rotation transmis à la section d'introduction de force (3), et
dans laquelle la cellule de mesure de couple de rotation comporte en outre un dispositif de détection (65) attribué à la section de balayage de codage (51) pour le balayage de la section de balayage de codage (51), **caractérisée en ce que** la section de balayage de codage comporte au moins un profil en forme de vallée.

2. Cellule de mesure de couple de rotation selon la revendication 1, dans laquelle l'au moins un endroit avec la section de balayage de codage (51) effectue un mouvement essentiellement translatoire lors de l'introduction d'un couple de rotation, dans laquelle une distance axiale entre la section d'introduction de force (3) et la section de dérivation de force (5) reste inchangée sur toute l'étendue du trajet de déformation de la section de balayage de codage (51) lors de la transmission d'un couple de rotation à détecter.

3. Cellule de mesure de couple de rotation selon la revendication 1 ou 2, dans laquelle le corps de déformation (9) est formé par au moins deux ou trois barrettes élastiques (21, 23, 25 ; 31, 33 ; 35) respectivement pour l'accouplement par transmission de force de la section d'introduction de force (3) avec la section de balayage de codage (51) et de la section de dérivation de force (5) avec la section de balayage de codage (51), dans laquelle les au moins deux ou trois barrettes élastiques (21, 23, 25 ; 31, 33 ; 35) présentent une forme de barre ou de poutre allongée, dont la section transversale profilée est adaptée de par sa forme à la force de charge attendue sur l'étendue longitudinale des barrettes élastiques de manière à obtenir une répartition essentiellement régulière des tensions à l'intérieur du matériau formant les barrettes élastiques respectives.

4. Cellule de mesure de couple de rotation selon la revendication 3, dans laquelle les au moins deux ou trois barrettes élastiques (21, 23, 25 ; 31, 33 ; 35) du corps de déformation côté introduction de force et du corps de déformation côté dérivation de force sont essentiellement de la même longueur et/ou disposées selon un angle d'attaque aigu par rapport à une direction axiale et/ou par rapport à un axe de torsion, lequel est essentiellement identique pour les au moins deux ou trois barrettes élastiques (21, 23, 25 ; 31, 33 ; 35) du corps de déformation côté introduction de force ainsi que du corps de déformation côté dérivation de force, dans l'état exempt de charge du corps de déformation (9).

5. Cellule de mesure de couple de rotation selon la revendication 3 ou 4, dans laquelle les au moins deux ou trois barrettes élastiques (21, 23, 25 ; 31, 33 ; 35) du corps de déformation côté introduction de force ainsi que du corps de déformation côté dérivation de force sont disposées de telle façon les unes par rapport aux autres, que les au moins deux ou trois barrettes élastiques du corps de déformation côté introduction de force se redressent avec l'augmentation d'un angle d'attaque (α) lors de l'introduction d'une charge de couple de rotation (M), et que les au moins deux ou trois barrettes élastiques (21, 23, 25 ; 31, 33 ; 35) du corps de déformation côté dérivation de force s'inclinent avec la diminution d'un angle d'attaque (α).

6. Cellule de mesure de couple de rotation selon l'une des revendications précédentes 3 à 5, dans laquelle les au moins deux ou trois barrettes élastiques côté introduction de force (21, 23, 25) et les au moins deux ou trois barrettes élastiques côté dérivation de force (31, 33, 35) débouchent sur une section centrale en forme de disque (41, 41', 41") du corps de déformation (9), laquelle comporte une surface périphérique, sur laquelle est prévue la section de balayage de codage (51), et/ou laquelle présente deux surfaces d'embouchure s'étendant parallèlement respectivement dans un plan radial, auxquelles se joignent les au moins deux ou trois barrettes élastiques (21, 23, 25 ; 31, 33 ; 35) de manière à former une seule pièce, dans laquelle une section de patte de jonction de chaque barrette élastique (21, 23, 25 ; 31, 33 ; 35) des au moins deux ou trois barrettes élastiques côté dérivation de force (31, 33, 35) est diamétralement et essentiellement axialement opposée à une section de patte de jonction des barrettes élastiques (21, 23, 25 ; 31, 33 ; 35) des au moins deux ou trois barrettes élastiques côté introduction de force (21, 23, 25).

7. Cellule de mesure de couple de rotation selon la revendication 6, dans laquelle une articulation pivotante élastiquement déformable est formée au niveau de la transition structurelle entre les au moins deux ou trois barrettes élastiques (21, 23, 25 ; 31, 33; 35) et la section centrale en forme de disque (41, 41', 41") du corps de déformation (9), laquelle définit un axe de pivotement horizontal, autour duquel la barrette élastique respective s'incline ou se redresse de façon pivotante par rapport à la section centrale (41, 41', 41") en fonction de l'introduction de force.

8. Cellule de mesure de couple de rotation selon l'une des revendications 3 à 7, dans laquelle il est prévu moins de dix, huit ou six barrettes élastiques (21, 23, 25 ; 31, 33 ; 35) pour le corps de déformation côté introduction de force (9) ainsi que pour le corps de déformation côté dérivation de force (9), le nombre de barrettes élastiques étant identique pour le corps de déformation côté introduction de force (19) et le corps de déformation côté dérivation de force (29).

9. Cellule de mesure de couple de rotation selon l'une des revendications précédentes, dans laquelle un profil périphérique en forme de collines et de vallées s'étend dans la direction périphérique par rapport à la direction axiale, et/ou dans lequel un profil axial en forme de collines et de vallées s'étend dans la direction axiale, les collines et les vallées s'étendant parallèlement les unes aux autres.

10. Cellule de mesure de couple de rotation selon l'une des revendications précédentes, comportant un dispositif de détection (65) attribué à la section de balayage de codage (51) pour le balayage sans contact de la section de balayage de codage (51).
